(19) Europäisches Patentamt
European Patent Office
Office européen des brevets

(11) EP 3 715 380 A1

(12) EUROPEAN PATENT APPLICATION
published in accordance with Art. 153(4) EPC

(43) Date of publication:
**30.09.2020 Bulletin 2020/40**

(21) Application number: **18881476.8**

(22) Date of filing: **21.11.2018**

(51) Int Cl.:
***C08F 2/44*** *(2006.01)* ***B01D 69/00*** *(2006.01)*
***C08F 292/00*** *(2006.01)*

(86) International application number:
**PCT/JP2018/043060**

(87) International publication number:
**WO 2019/103058 (31.05.2019 Gazette 2019/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2017 JP 2017223766**

(71) Applicant: **Nitto Denko Corporation**
**Ibaraki-shi, Osaka 567-8680 (JP)**

(72) Inventors:
- **KIMURA, Naomichi**
  **Ibaraki-shi**
  **Osaka 567-8680 (JP)**
- **ITO, Yuri**
  **Ibaraki-shi**
  **Osaka 567-8680 (JP)**
- **IHARA, Terukazu**
  **Ibaraki-shi**
  **Osaka 567-8680 (JP)**
- **SHIMAZU, Akira**
  **Ibaraki-shi**
  **Osaka 567-8680 (JP)**
- **MATSUYAMA, Hideto**
  **Kobe-shi**
  **Hyogo 657-8501 (JP)**
- **KAMIO, Eiji**
  **Kobe-shi**
  **Hyogo 657-8501 (JP)**
- **YASUI, Tomoki**
  **Kobe-shi**
  **Hyogo 657-8501 (JP)**

(74) Representative: **Hoffmann Eitle**
**Patent- und Rechtsanwälte PartmbB**
**Arabellastraße 30**
**81925 München (DE)**

# (54) METHOD FOR PRODUCING IONIC LIQUID-CONTAINING STRUCTURE, AND IONIC LIQUID-CONTAINING STRUCTURE

(57) An object of the present invention is to provide a method which can produce an ionic liquid-containing network structure with high productivity. A method for producing an ionic liquid-containing structure, which includes an inorganic particle network structure forming step of forming a network structure by inorganic particles in the presence of an ionic liquid, and a polymer network structure forming step of forming a network structure by polymerization of a monomer component containing at least a polar group-containing monomer in the presence of the ionic liquid is provided.

EP 3 715 380 A1

## Description

TECHNICAL FIELD

The present invention relates to a method for producing an ionic liquid-containing structure and an ionic liquid-containing structure.

BACKGROUND ART

Recently, there has been proposed a technology of applying an interpenetrating network structure to a gel that responds to two or more stimuli of oxidation-reduction, temperature, electricity, and the like (Patent literature 1).

As a high-strength gel structure (IPN gel, double network (DN) gel) having an interpenetrating network structure, a hydrogel using water as a solvent may be mentioned. As high-strength hydrogels having other structures, a slide ring gel, a tetra-PEG gel, a nanocomposite gel, and the like have been proposed. However, since volatile water is used as a solvent, there is a problem that it volatilizes under an atmospheric environment and cannot be stored for a long period of time.

On the other hand, as a gel structure that can be stored for a long period of time under an atmospheric environment, an ionic gel using an ionic liquid having extremely low volatility as a solvent has been developed, and a slide ring gel and a tetra-PEG gel both using the ionic liquid have been also proposed. However, they have problems that the preparation method thereof is complicated, use of a special compound is necessary, and they are insufficient in versatility.

Also, there has been proposed a technology of a pressure-sensitive adhesive composition wherein an acrylic polymer and a cross-linked polymer consisting of an acrylic monomer and a radically polymerizable oligomer mutually penetrate to form a structure in which they are entangled in a network form and the interpenetrating network is appropriately swelled by an ionic liquid to improve pressure-sensitive adhesiveness and impact resistance (Patent Literature 2).

However, the ratio of the ionic liquid in the pressure-sensitive adhesive composition is low, the performance of the ionic liquid could not be fully utilized, and further, the moldability and the self-supporting properties are not sufficient.

Incidentally, an ionic liquid has extremely low volatility, has fluidity even at room temperature, and has good thermal conductivity. However, under relatively high pressure conditions, the ionic liquid generally leaks out of a porous support to be used for immobilizing the ionic liquid, and is difficult to use under high pressure. Thus, for example, a gel-like structure having high strength (e.g., toughness) has been desired.

As described above, there is room for improvement in the ionic liquid-containing interpenetrating network structure having long-term storability, transparency, flexibility, self-supporting properties, moldability, and toughness while the preparation is simple, and a method for producing the same.

As such an ionic liquid-containing interpenetrating network structure having long-term storability, transparency, flexibility, self-supporting properties, moldability, and toughness, and a method for producing the same, Patent Literature 3 proposes an ionic liquid-containing interpenetrating network structural body containing a specific network structure formed by polycondensation, a specific network structure formed by radical polymerization, and a specific ionic liquid, and a method for producing the same.

CITATION LIST

PATENT LITERATURE

Patent Literature 1: JP-T-2012-511612 (the term "JP-T" as used herein means a published Japanese translation of a PCT patent application)
Patent Literature 2: JP-A-2008-24818
Patent Literature 3: Japanese Patent No. 6103708

SUMMARY OF INVENTION

TECHNICAL PROBLEM

However, in the technology described in Patent Literature 3, a network structure is formed by polycondensation of a monomer component such as tetraethyl orthosilicate (TEOS). Since it takes a long period of time to form the network structure by the polycondensation, there is a problem in terms of productivity.

In view of the above problems, an object of the present invention is to provide a method capable of producing an ionic liquid-containing structure with high productivity. Another object thereof is to provide an ionic liquid-containing structure having long-term storability, transparency, flexibility, self-supporting properties, moldability, and toughness.

## SOLUTION TO PROBLEM

As a result of intensive studies to solve the above-mentioned problems, the present inventors have found that the above problems can be solved by forming a network structure through network formation of inorganic particles, and have accomplished the present invention.

That is, an embodiment of the present invention relates to a method for producing an ionic liquid-containing structure, including:

an inorganic particle network structure forming step of forming a network structure by inorganic particles in the presence of an ionic liquid, and
a polymer network structure forming step of forming a network structure by polymerization of a monomer component containing at least a polar group-containing monomer in the presence of the ionic liquid.

In an embodiment of the production method of the present invention, the inorganic particles may include inorganic oxide particles.

In an embodiment of the production method of the present invention, the inorganic oxide particles may include silica particles.

In an embodiment of the production method of the present invention, the inorganic particles may have a specific surface area of 20 to 300 $m^2/g$.

In an embodiment of the production method of the present invention, the inorganic particles may have an average primary particle diameter of 1 to 100 nm.

In an embodiment of the production method of the present invention, the polar group of the polar group-containing monomer may be an atomic group containing an N atom or an O atom.

In an embodiment of the production method of the present invention, the amount of the ionic liquid to be used may be 5 to 95% by mass based on 100% by mass of components constituting the ionic liquid-containing structure.

The production method of an embodiment of the present invention may further include, before the inorganic particle network structure forming step and the polymer network structure forming step, a mixing step of mixing the ionic liquid, the inorganic particles, and the monomer component.

Moreover, an embodiment of the present invention relates to an ionic liquid-containing structure including:

an ionic liquid,
an inorganic particle network structure, and
a polymer network structure,
wherein an average of a mesh size of the inorganic particle network structure is 50 nm or more and the polymer network structure is composed of a polymer having a polar group.

In the ionic liquid-containing structure of the present invention, a standard deviation of the mesh size of the inorganic particle network structure may be 20 nm or more.

## ADVANTAGEOUS EFFECTS OF INVENTION

According to the method for producing an ionic liquid-containing structure according to an embodiment of the present invention, since the inorganic particle network is formed through network formation of inorganic particles, the inorganic particle network can be formed in a short period of time. Therefore, the ionic liquid-containing structure can be produced with high productivity. Moreover, since the drying time during film formation can be performed in a short period of time, for example, it is possible to cope with continuous thin film formation by a roll-to-roll method. In addition, the ionic liquid-containing structure has a long-term storability, transparency, flexibility, self-supporting properties, moldability, and toughness.

## BRIEF DESCRIPTION OF DRAWINGS

FIG. 1A is a simulation figure of a binarized cross-sectional TEM image of an exemplified ionic liquid-containing

structure (membrane sample) for explaining a method of calculating the average and standard deviation of the mesh size of the inorganic particle network structure.

FIG. 1B is a simulation figure of a binarized cross-sectional TEM image of an exemplified ionic liquid-containing structure (membrane sample) for explaining a method of calculating the average and standard deviation of the mesh size of the inorganic particle network structure.

FIG. 1C is a simulation figure of a binarized cross-sectional TEM image of an exemplified ionic liquid-containing structure (membrane sample) for explaining a method of calculating the average and standard deviation of the mesh size of the inorganic particle network structure.

## DESCRIPTION OF EMBODIMENTS

Hereinafter, embodiments of the present invention will be described in detail.

### <Method for Producing Ionic Liquid-Containing Structure>

The method for producing an ionic liquid-containing structure according to an embodiment of the present invention (hereinafter also referred to as the production method of the present embodiment) includes an inorganic particle network structure forming step of forming a network structure by inorganic particles in the presence of an ionic liquid, and a polymer network structure forming step of forming a network structure by polymerization of a monomer component containing at least a polar group-containing monomer in the presence of the ionic liquid.

According to the production method of the present embodiment, a dispersion liquid of inorganic particles for forming an inorganic particle network structure and a monomer solution for forming a polymer network structure are mixed to advance the network formation of the inorganic particles for forming an inorganic particle network structure and the polymerization of the monomer solution for forming a polymer network structure independently in the presence of an ionic liquid and, thereby, an ionic liquid-containing structure in which a high concentration ionic liquid is included in these network structures can be easily manufactured with good productivity.

### (Ionic Liquid)

The ionic liquid to be used in the production method of the present embodiment is not particularly limited as long as the ionic liquid is composed of a pair of an anion and a cation and is a molten salt (ordinary temperature molten salt) that is liquid at 25°C. It has thermal stability and low vapor pressure and can be stored stably without volatilization even under an atmospheric environment, and conventionally known ones can be used. The ionic liquid functions as a dispersion solvent for the inorganic particles that form the inorganic particle network structure and functions as a solvent for the monomer component that forms the polymer network structure, and also, after the inorganic particle network structure and the polymer network structure are formed, the ionic liquid is included within these network structures.

In the present embodiment, the SP value of the ionic liquid is not particularly limited but, from the viewpoint of separability, it is preferably 20 $(J/cm^3)^{1/2}$ or more and more preferably 50 $(J/cm^3)^{1/2}$ or more. Further, from the viewpoint of polymer compatibility, it is preferably 90 $(J/cm^3)^{1/2}$ or less and more preferably 70 $(J/cm^3)^{1/2}$ or less.

Incidentally, the SP value of the ionic liquid is defined according to the following method.

First, molecular dynamics calculation is performed on a liquid system molecular model of a three-dimensional periodic boundary condition in which cation molecules and anion molecules constituting an ionic liquid were mixed in equimolar amounts, under NPT ensemble conditions of 1 atm and 298 K, to create an energetically stable cohesion model. Then, for the created cohesion model, the cohesive energy density is calculated by subtracting the total energy per unit area from the intramolecular energy value per unit area. The SP value is defined as the square root of this cohesive energy density. Here, COMPASS is used for the force field of the molecular dynamics calculation, and as all the molecular models, there are employed those obtained by executing the structure optimization by the density functional method using B3LYP/6-31G(d) as a basis function. The point charge of each element in the molecular model may be determined by an electrostatic potential fitting method.

Further, the molar volume of the ionic liquid is also not particularly limited, but is preferably 50 $cm^3/mol$ or more, and more preferably 100 $cm^3/mol$ or more from the viewpoint of separation characteristics. Also, it is preferably 800 $cm^3/mol$ or less, and more preferably 300 $cm^3/mol$ or less

Incidentally, the molar volume of the ionic liquid is defined according to the following method.

First, molecular dynamics calculation is performed on a liquid system molecular model of a three-dimensional periodic boundary condition in which cation molecules and anion molecules constituting an ionic liquid were mixed in equimolar amounts, under NPT ensemble conditions of 1 atm and 298 K, to create an energetically stable cohesion model. Then, for the created cohesion model, the molecular weight and the density are calculated. The molar volume is defined as molecular weight/density. Here, COMPASS is used for the force field of the molecular dynamics calculation,

and as all the molecular models, there are employed those obtained by executing the structure optimization by the density functional method using B3LYP/6-3 1G(d) as a basis function. The point charge of each element in the molecular model may be determined by an electrostatic potential fitting method.

In the present embodiment, as a specific ionic liquid, a suitable ionic liquid can be appropriately selected according to the use to which the ionic liquid-containing structure is applied.

For example, assuming a use such as a $CO_2$-selective permeable membrane, an ionic liquid having imidazolium, pyridinium, ammonium or phosphonium and a substituent having 1 or more carbon atoms, a Gemini-type ionic liquid, and the like may be mentioned.

In the ionic liquid having imidazolium and a substituent having 1 or more carbon atoms, as the substituent having 1 or more carbon atoms, there may be mentioned an alkyl group having 1 or more and 20 or less carbon atoms, a cycloalkyl group having 3 or more and 8 or less carbon atoms, an aryl group having 6 or more and 20 or less carbon atoms, and the like, which may be further substituted with a hydroxyl group, a cyano group, an amino group, a monovalent ether group, or the like (e.g., a hydroxyalkyl group having 1 or more and 20 or less carbon atoms).

As the alkyl group having 1 or more and 20 or less carbon atoms, there may be mentioned a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, a 1,5-dimethylhexyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexyl group, a cyclohexylpropyl group, a cyclododecyl group, a norbornyl group, a bornyl group, an adamantyl group, and the like. These groups may be further substituted with a hydroxyl group, a cyano group, an amino group, a monovalent ether group, or the like.

As the cycloalkyl group having 3 or more and 8 or less carbon atoms, there may be mentioned a cyclopropyl group, a cyclobutyl group, a cyclopentyl group, a cyclohexyl group, a cycloheptyl group, a cyclooctyl group, and the like. These groups may be further substituted with a hydroxyl group, a cyano group, an amino group, a monovalent ether group, or the like.

As the aryl group having 6 or more and 20 or less carbon atoms, there may be mentioned a phenyl group, a toluyl group, a xylyl group, a mesityl group, an anisyl group, a naphthyl group, a benzyl group, and the like. These groups may be further substituted with a hydroxyl group, a cyano group, an amino group, a monovalent ether group, or the like.

The compound having imidazolium and a substituent having 1 or more carbon atoms may further have a substituent such as an alkyl group, and may form a salt with a counter anion. As the counter anion, there may be mentioned alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, halide, and the like. From the viewpoint of gas separation performance, bis(fluorosulfonyl)imide, bis(trifluoromethanesulfonyl)imide, dicyanamide, tricyanomethanide, and tetracyanoborate are preferred.

As the ionic liquid having imidazolium and a substituent having 1 or more carbon atoms, there may be mentioned 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimymidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, 1-(2-hydroxyethyl)-3-methylimidazolium bis(trifluoromethanesulfonyl)imide, and the like.

Among them, from the viewpoint of gas separation performance, particularly preferred are 1-ethyl-3-methylimidazolium bis(fluorosulfonyl)imide ([Emim] [FSI]), 1-ethyl-3-methylimidazolium dicyanamide ([Emim] [DCA]), 1-ethyl-3-methylimidazolium tricyanomethanide ([Emim] [TCM]), 1-ethyl-3-methylimidazolium tetracyanoborate ([Emim] [TCB]), 1-butyl-3-methylimidazolium bis(trifluoromethanesulfonyl)imide ([$C_4$mim] [$TF_2$N]), 1 -(2-hydroxyethyl)-3-methylimidazo-

lium bis(trifluoromethanesulfonyl)imide ([$C_2$OHim] [$TF_2$N]).

A Gemini-type ionic liquid is a compound having a structure in which a plurality of molecules constituting the ionic liquid are bonded via a bonding site.

As the ionic liquid, those described above may be mentioned, and preferred ones are also the same.

As the binding site, for example, an alkylene group having 1 or more and 20 or less carbon atoms or a divalent ether group can be used. For example, there may be mentioned a methylene group, an ethylene group, an n-propylene group, an n-butylene group, an n-pentylene group , an n-hexylene group, an n-heptylene group, an n-octylene group, an n-nonylene group, an n-decylene group, an n-undecylene group, an n-dodecylene group, an n-tridecylene group, an n-tetradecylene group, an n-pentadecylene group , an n-hexadecylene group, an n-heptadecylene group, an n-octadecylene group, an n-nonadecylene group, an n-eicosadecylene group, and the like, and divalent linking groups obtained by combining them with an ether bond (-O-). The bonding site is preferably an alkylene group having 1 or more and 20 or less carbon atoms.

As the Gemini-type ionic liquid, a compound represented by the following general formula can be preferably exemplified.

[Chem 1]

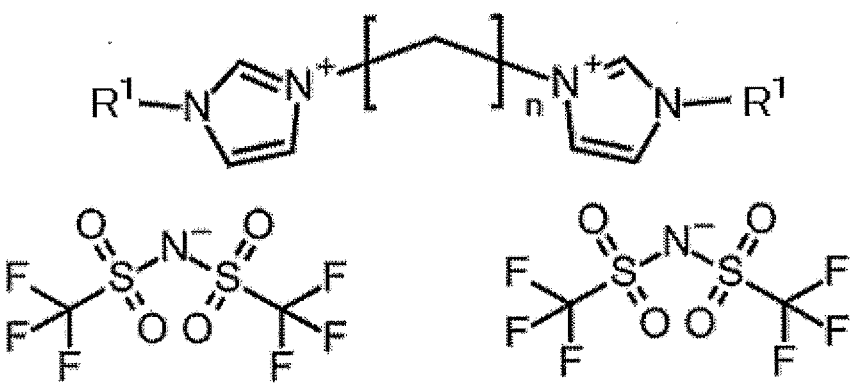

In the above general formula, $R^1$ represents an alkyl group having 1 or more and 20 or less carbon atoms, a cycloalkyl group having 3 or more and 8 or less carbon atoms, or an aryl group having 6 or more and 20 or less carbon atoms and these groups may be further substituted with a hydroxyl group, a cyano group, an amino group, or a monovalent ether group; n represents an integer of 1 to 20.

In the above general formula, as the alkyl group having 1 or more and 20 or less carbon atoms, the cycloalkyl group having 3 or more and 8 or less carbon atoms, or an aryl group having 6 or more and 20 or less carbon atoms represented by $R^1$, those described above may be mentioned and preferred ones are also the same.

Particularly, from the viewpoint of strength, as the Gemini-type ionic liquid, [$C_9$(mim)$_2$] [$TF_2$N] and [$C_9$($C_2$OHim)$_2$] [$TF_2$N] are particularly preferred.

As for these Gemini-type ionic liquids, a $Tf_2$N salt can be synthesized, from a Br salt synthesized by an SN2 reaction, by a metathesis method (Reference Literature: Chem. Mater. 2007, 19, 5848-5850).

The ionic liquid having phosphonium and a substituent having 1 or more carbon atoms exhibit properties equivalent to those of the ionic liquid having imidazolium and a substituent having 1 or more carbon atoms.

The substituent having 1 or more carbon atoms may be the same as those exemplified above.

The ionic liquid having phosphonium and a substituent having 1 or more carbon atoms may further have a substituent such as an alkyl group, and may form a salt with a counter anion. As the counter anion, there may be mentioned alkyl sulfate, tosylate, methanesulfonate, acetate, bis(fluorosulfonyl)imide, bis(trifluoromethyl-sulfonyl)imide, thiocyanate, dicyanamide, tricyanomethanide, tetracyanoborate hexafluorophosphate, tetrafluoroborate, halide, derivatives of amino acids, derivatives of nitrogen-containing heterocyclic compounds, and the like.

Among them, as the counter anion, a derivative of an amino acid or a derivative of a nitrogen-containing heterocyclic compound is preferred, and methylglycine, dimethylglycine, trimethylglycine, indazole, or imidazole is more preferred.

As the ionic liquid having phosphonium and a substituent having 1 or more carbon atoms, tetrabutylphosphonium methylglycine, tetrabutylphosphonium dimethylglycine, tetrabutylphosphonium trimethylglycine, and the like may be mentioned.

In the production method of the present embodiment, from the viewpoint of the gas separation performance of the ionic liquid-containing structure to be obtained, the amount of the ionic liquid to be used is preferably 5 to 95% by mass, and more preferably 30 to 90% by mass in 100% by mass of the components constituting the ionic liquid-containing structure. When the content is less than 5% by mass, the separation performance may be remarkably deteriorated. When the content exceeds 95% by mass, the self-supporting properties of the molded product may not be ensured.
Moreover, the amount of the ionic liquid is preferably 10 to 10,000 parts by mass, more preferably 100 to 4,700 parts by mass relative to 100 parts by mass of the components constituting the polymer network structure.

(Inorganic Particle Network Structure Forming Step)

In the inorganic particle network structure forming step in the production method of the present embodiment, an inorganic particle network structure is formed by network formation of inorganic particles in the presence of an ionic liquid. Since the network formation of the inorganic particles proceeds in a short period of time owing to the cohesion of the inorganic particles, according to the production method of the present embodiment, the ionic liquid-containing structure can be produced with high productivity.
The inorganic particles to be used are not particularly limited as long as they can form a network by cohesive force, and there may be mentioned particles of inorganic oxides such as silica, titania, zirconia, alumina, copper oxide, layered silicate, zeolite, and the like. Among them, silica particles are preferable from the viewpoint of cohesive force. Further, as the silica particles, fumed silica (e.g., AEROSIL (registered trademark) 130, AEROSIL (registered trademark) OX-50, AEROSIL (registered trademark) 200, etc.), colloidal silica, and the like are preferred. Incidentally, as the inorganic particles, one kind or a combination of two or more kinds can be used. Moreover, the inorganic particles may have been subjected to various surface treatments such as a dimethylsilyl treatment and a trimethylsilyl treatment.
The specific surface area of the inorganic particles is preferably 20 $m^2/g$ or more, and more preferably 50 $m^2/g$ or more, from the viewpoint of the reinforcing effect. Further, from the viewpoint of coatability of the dispersion liquid, it is preferably 300 $m^2/g$ or less, more preferably 200 $m^2/g$ or less.
Moreover, from the viewpoint of high toughness, at least two kinds of inorganic particles having different specific surface areas may be mixed and used. In that case, the inorganic particles having a specific surface area of 20 $m^2/g$ or more and 90 $m^2/g$ or less and the inorganic particles having a specific surface area of 100 $m^2/g$ or more and 200 $m^2/g$ or less are preferably mixed and used.
Here, the specific surface area of the inorganic particles is measured by the BET method.
Furthermore, the average primary particle diameter of the inorganic particles is preferably 1 nm or more, and more preferably 5 nm or more, from the viewpoint of the reinforcing effect. In addition, from the viewpoint of dispersion stability, it is preferably 100 nm or less, and more preferably 50 nm or less.
Here, the average primary particle diameter of the inorganic particles is measured by transmission electron microscopic observation.
The average primary particle diameter of the inorganic particles can be calculated, for example, by measuring the diameter of each primary particle in a field of view containing about 50 primary particles and determining the average thereof. In this case, as the diameter of each primary particle, the maximum diameter passing through the center of the particle is adopted.
In the first step, the temperature at the time of forming the network of the inorganic particles is, for example, 5 to 50°C, and preferably 15 to 30°C.
The time required for forming the network of the inorganic particles is, for example, less than 5 minutes, and preferably less than 1 minute.
Moreover, at the time of forming the network of the inorganic particles, an alcohol such as ethanol, propanol, or butanol, water, or the like may be further used as a dispersion medium in addition to the ionic liquid.

(Polymer Network Structure Forming Step)

In the polymer network structure forming step of the production method of the present embodiment, a polymer network structure is formed by polymerizing a monomer component containing at least a polar group-containing monomer in the presence of an ionic liquid. Since the polymer contained in the polymer network structure thus formed has a polar group, the polymer can stably hold the ionic liquid even at a high content.
The polar group in the polar group-containing monomer contained in the monomer component to be used for forming the polymer network structure means an atomic group containing atoms other than carbon and hydrogen, and typically an atomic group containing an N atom or an O atom may be mentioned. As such a polar group, for example, there may be mentioned atomic groups containing an amino group (including an amino group substituted with an alkyl group or the like), an amide group, an acrylamide group, an acetamide group, a morpholino group, a pyrrolidone skeleton, a carboxyl group, an ester group, a hydroxyl group, or an ether group.

As the atomic group containing an amide group, for example, there may be mentioned atomic groups having an amide group, an acrylamide group, an acetamide group, a pyrrolidone skeleton, or the like. As the monomer having an acrylamide group, since one having lower bulkiness can grow for a longer period, methylacrylamide or dimethylacrylamide is preferred.

As the atomic group containing an ether group, for example, there may be mentioned polyether chains like a polyalkyl ether chain such as a polyethylene glycol chain or a polypropylene glycol chain.

In the polymer network structure forming step, the polymerization of the monomer component is preferably radical polymerization from the viewpoint of promoting the flexibility and stretchability of the ionic liquid-containing structure. The radical polymerization is preferably performed such that the monomer component is polymerized in a chain reaction with a radical being centered and the polymer network structure to be formed has lower crosslinking density than the inorganic particle network structure has. The monomer component to be used in the radical polymerization is suitably one mainly polymerized as two-dimensional cross-linking, in order to have low crosslinking density.

In the case where the polymer network structure forming step is performed by radical polymerization, it is preferable to employ either thermal polymerization or photopolymerization (ultraviolet irradiation).

The mass ratio (monomer component/inorganic particle) of the monomer component for forming the polymer contained in the polymer network structure to the inorganic particle for forming the network of the inorganic particles contained in the inorganic particle network structure is preferably 1/10 to 10/1, and more preferably 1/4 to 4/1.

The crosslinking agent is not particularly limited, and various ones are selected according to the monomers to be crosslinked and polymerized. For example, in the case where methylacrylamide or dimethylacrylamide is used as a monomer in the radical polymerization, N,N'-methylenebisacrylamide or the like can be copolymerized as a crosslinking monomer

In addition, the crosslinking agent that may be copolymerized during the radical polymerization is not particularly limited, but a conventionally known crosslinking agent can be appropriately selected and, for example, a polyfunctional (meth)acrylate or the like can be used. Further, the crosslinking agent which may not be copolymerized during the radical polymerization is not particularly limited, but there may be used an isocyanate-based crosslinking agent, an epoxy-based crosslinking agent, an aziridine-based crosslinking agent, a melamine-based crosslinking agent, a metal chelate-based crosslinking agent, a metal salt-based crosslinking agent, a peroxide-based crosslinking agent, an oxazoline-based crosslinking agent, a urea-based crosslinking agent, an amino-based crosslinking agent, a carbodiimide-based crosslinking agent, a coupling agent-based crosslinking agent (e.g., a silane coupling agent), and the like. One of these agents may be used alone, or two or more thereof may be used in combination.

As the polyfunctional (meth)acrylate (that is, a monomer having two or more (meth)acryloyl groups in one molecule), for example, there may be mentioned trimethylolpropane tri(meth)acrylate, pentaerythritol tetra(meth)acrylate, 1,2-ethylene glycol di(meth)acrylate, 1,6-hexanediol di(meth)acrylate, dipentaerythritol hexaacrylate, and the like.

Examples of the isocyanate-based crosslinking agent include alicyclic polyisocyanates such as 1,6-hexamethylene diisocyanate, 1,4-tetramethylene diisocyanate, 2-methyl-1,5-pentane diisocyanate, 3-methyl-1,5-pentane diisocyanate, and lysine diisocyanate; alicyclic polyisocyanates such as isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate; aromatic polyisocyanates such as 2,4-tolylene diisocyanate; 2,6-tolylene diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; aromatic-aliphatic polyisocyanates such as xylylene-1,4-diisocyanate and xylylene-1,3-diisocyanate; and the like.

Examples of the epoxy crosslinking agent include epoxy-based compounds having two or more or three or more epoxy groups in one molecule, such as 1,3-bis(N,N-diglycidylaminomethyl)cyclohexane, N,N,N',N'-tetraglycidyl-m-xylenediamine, diglycidylaniline, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate ester, diglycidyl o-phthalate ester, triglycidyl-tris(2-hydroxyethyl) isocyanurate, resorcin diglycidyl ether, bisphenol S diglycidyl ether, 1,3-bis(N,N-diglycidylaminomethyl)benzene, 1,3-bis(N,N-diglycidylaminomethyl)toluene, 1,3,5-triglycidyl isocyanurate, N,N,N',N'-tetraglycidyl-m-xylylenediamine, glycerin triglycidyl ether, and trimethylolpropane glycidyl ether. For example, 1,3-bis(N,N-diglycidylaminomethyl)cyclohexane can be preferably used.

Incidentally, as the isocyanate-based crosslinking agent, there may be also used dimers or trimers, reaction products, or polymers of the isocyanate-based compounds exemplified above (for example, a dimer or trimer of diphenylmethane diisocyanate, a reaction product of trimethylolpropane with tolylene diisocyanate, a reaction product of trimethylolpropane with hexamethylene diisocyanate, polymethylene polyphenyl isocyanate, polyether polyisocyanate, or polyester polyisocyanate), and the like. For example, a reaction product of trimethylolpropane with tolylene diisocyanate

can be preferably used.

The amount of the crosslinking agent to be used can be, for example, preferably 0.02 to 8 parts by mass, and more preferably 0.08 to 5 parts by mass relative to 100 parts by mass of the components constituting the ionic liquid-containing structure.

As the radical polymerization initiator, a water-soluble thermal catalyst such as potassium persulfate or the like can be used in the case where methylacrylamide or dimethylacrylamide as a monomer is subjected to thermal polymerization. In the case of performing photopolymerization, 2-oxoglutaric acid can be used as a photosensitizer.

As the other polymerization initiators, an azo-based polymerization initiator, a peroxide-based initiator, a redox-based initiator composed of a combination of a peroxide and a reducing agent, a substituted ethane-based initiator, and the like can be used. Various photopolymerization initiators can be used for photopolymerization.

Examples of the azo-based polymerization initiator include 2,2'-azobisisobutyronitrile (AIBN), 2,2'-azobis-2-methylbutyronitrile, dimethyl-2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride, and the like.

Examples of the peroxide-based initiator include persulfate salts such as potassium persulfate and ammonium persulfate; dibenzoyl peroxide, t-butyl permaleate, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, hydrogen peroxide, and the like.

Examples of the redox-based initiator include a combination of a peroxide and ascorbic acid (a combination of aqueous hydrogen peroxide and ascorbic acid, etc.) and a combination of a peroxide and an iron(II) salt (a combination of aqueous hydrogen peroxide and an iron(II) salt, etc.), a combination of a persulfate salt and sodium hydrogen sulfite, and the like.

As the substituted ethane-based initiator, phenyl-substituted ethane and the like are exemplified.

As the photopolymerization initiator, preferred are (1) acetophenone-based, (2) ketal-based, (3) benzophenone-based, (4) benzoin-based, benzoyl-based, (5) xanthone-based, (6) active halogen compound [(6-1) triazine-based, (6-2) halomethyloxadiazole-based, (6-3) coumarin-based], (7) acridine-based, (8) biimidazole-based, and (9) oxime ester-based photopolymerization initiators.

(1) As the acetophenone-based photopolymerization initiator, for example, there may be suitably mentioned 2,2-diethoxyacetophenone, p-dimethylaminoacetophenone, 2-hydroxy-2-methyl-1-phenyl-propan-1-one, p-dimethylaminoacetophenone, 4'-isopropyl-2-hydroxy-2-methyl-propiophenone, 1-hydroxy-cyclohexyl-phenyl-ketone, 2-benzyl-2-dimethylamino-1-(4-morpholinophenyl)-butanone-1, 2-tolyl-2-dimethylamino-1-(4-morpholinophenyl)-butanone-1,2-methyl-1-[4-(methylthio)phenyl]-2-morpholinopropanone-1, and the like.

(2) As the ketal-based photopolymerization initiator, for example, benzyl dimethyl ketal, benzyl-P-methoxyethyl acetal, and the like may be suitably mentioned.

(3) As the benzophenone-based photopolymerization initiator, for example, there may be suitably mentioned benzophenone, 4,4'-(bisdimethylamino)benzophenone, 4,4'-(bisdiethylamino)benzophenone, 4,4'-dichlorobenzophenone, 2-benzyl-2-dimethylamino-1-(4-morpholinophenyl)-butanone-1, 2-tolyl-2-dimethylamino-1-(4-morpholinophenyl)-butanone-1, 2-methyl-1-[4-(methylthio)phenyl]-2-morpholinopropanone-1, and the like.

(4) As the benzoin-based or benzoyl-based photopolymerization initiator, for example, benzoin isopropyl ether, benzoin isobutyl ether, benzoin methyl ether, methyl o-benzoyl benzoate, and the like may be suitably mentioned.

(5) As the xanthone-based photopolymerization initiator, for example, there may be suitably mentioned diethylthioxanthone, diisopropylthioxanthone, monoisopropylthioxanthone, chlorothioxanthone, and the like.

(6-1) As the triazine-based photopolymerization initiator which is an active halogen compound, for example, there may be suitably mentioned 2,4-bis(trichloromethyl)-6-p-methoxyphenyl-s-triazine, 2,4-bis(trichloromethyl)-6-p-methoxystyryl-s-triazine, 2,4-bis(trichloromethyl)-6-(1-p-dimethylaminophenyl)-1,3-butadienyl-s-triazine, 2,4-bis(trichloromethyl)-6-biphenyl-s-triazine, 2,4-bis(trichloromethyl)-6-(p-methylbiphenyl)-s-triazine, p-hydroxyethoxystyryl-2,6-di(trichloromethyl)-s-triazine, methoxystyryl-2,6-di(trichloromethyl-s-triazine, 3,4-dimethoxystyryl-2,6-di(trichloromethyl)-s-triazine, 4-benzoxolan-2,6-di(trichloromethyl)-s-triazine, 4-(o-bromo-p-N,N-(diethoxycarbonylamino))-phenyl)-2,6-di(chloromethyl)-s-triazine, 4-(p-N,N-(diethoxycarbonylamino)phenyl)-2,6-di(chloromethyl)-s-triazine, and the like.

(6-2) As the halomethyloxadiazole-based photopolymerization initiator, for example, there may be suitably mentioned 2-trichloromethyl-5-styryl-1,3,4-oxodiazole, 2-trichloromethyl-5-(cyanostyryl)-1,3,4-oxodiazole, 2-trichloromethyl-5-(naphth-1-yl)-1,3,4-oxodiazole, 2-trichloromethyl-5-(4-styryl)styryl-1,3,4-oxodiazole, and the like.

(6-3) As the coumarin-based photopolymerization initiator, for example, there may be suitably mentioned 3-methyl-5-amino-((s-triazin-2-yl)amino)-3-phenylcoumarin, 3-chloro-5-diethylamino-((s-triazin-2-yl)amino)-3-phenylcoumarin, 3-butyl-5-dimethylamino-((s-triazin-2-yl) amino)-3-phenylcoumarin, and the like.

(7) As the acridine-based photopolymerization initiator, for example, 9-phenylacridine, 1,7-bis(9-acridinyl)heptane, and the like may be suitably mentioned.

(8) As the biimidazole-based photopolymerization initiator, for example, there may be suitably mentioned 2-(o-chlorophenyl)-4,5-diphenylimidazolyl dimer, 2-(o-methoxyphenyl)-4,5-diphenylimidazolyl dimer, and 2-(2,4-dimethoxyphenyl)-4,5-diphenylimidazolyl dimer which are known as lophin dimers, 2-mercaptobenzimidazole, 2,2'-benzothiazolyl disulfide, and the like.

(9) As the oxime ester-based photopolymerization initiator, 1,2-octanedione, 1-[4-(phenylthio)-2-(O-benzoyloxime)], ethanone, 1-[9-ethyl-6-(2-methylbenzoyl)-9H-carbazol-3-yl]-1-(O-acetyloxime), and the like may be suitably mentioned.

The amount of the radical polymerization initiator to be used may be a usual amount, and is, for example, preferably 0.02 to 10 parts by mass, and more preferably 0.08 to 5 parts by mass relative to 100 parts by mass of the components constituting the ionic liquid-containing structure.

The temperature of the radical polymerization is, for example, 25 to 80°C, preferably 30 to 70°C, and more preferably 40 to 60°C when thermal polymerization is employed, and it is 10 to 60°C, preferably 20 to 50°C, and more preferably 20 to 40°C when photopolymerization is employed.

The reaction time of the radical polymerization is, for example, 1 to 100 hours, preferably 20 to 80 hours, more preferably 30 to 70 hours, and still more preferably 40 to 60 hours when the thermal polymerization is employed, and the time is, for example, 0.1 to 100 hours, preferably 1 to 70 hours, more preferably 5 to 40 hours, and still more preferably 10 to 30 hours when photopolymerization is employed.

At the time of photopolymerization, the wavelength of the ultraviolet ray is not particularly limited as long as it is an absorption wavelength at which the monomer(s) can be radically polymerized, but the wavelength can be preferably selected from a wavelength range of 200 to 550 nm, and the range is more preferably 250 to 500 nm, and still more preferably 300 to 400 nm. The intensity of the ultraviolet light is not particularly limited but, when the intensity is too weak, the polymerization time will become long, and when the intensity is too strong, heat generation and safety becomes problems. Therefore, the intensity is preferably 1 to 3000 mJ/($cm^2$.s), more preferably 10 to 2000 mJ/($cm^2$.s).

In the production method of the present embodiment, the order of the inorganic particle network structure forming step and the polymer network structure forming step is not particularly limited, and the polymer network structure forming step may be performed after the inorganic particle network structure forming step, or the inorganic particle network structure forming step may be performed after the polymer network structure forming step. Further, the inorganic particle network structure forming step and the polymer network structure forming step may be allowed to proceed simultaneously.

For example, the production method of the present embodiment may further include a mixing step of mixing an ionic liquid, inorganic particles, and a monomer component containing at least a polar group-containing monomer before the inorganic particle network structure forming step and the polymer network structure forming step. In this case, after the mixing step, the inorganic particle network structure forming step may be performed, and then the polymer network structure forming step may be performed. Further, after the mixing step, the polymer network structure forming step may be performed, and then the inorganic particle network structure forming step may be performed. Alternatively, after the mixing step, the inorganic particle network structure forming step and the polymer network structure forming step may be allowed to proceed simultaneously.

Moreover, in the production method of the present embodiment, after the inorganic particles for forming the inorganic particle network structure and the ionic liquid are mixed to form the inorganic particle network structure through network formation of the inorganic particles, the ionic liquid-containing structure may be produced by adding the monomer component for forming a polymer network structure and performing polymerization to form a polymer network structure. Alternatively, after the monomer component for forming a polymer network structure and the ionic liquid are mixed to form a polymer network structure by polymerization of the monomer component, the ionic liquid-containing structure may be produced by adding the inorganic particles for forming an inorganic particle network structure and forming an inorganic particle network structure through network formation of the inorganic particles.

<Ionic Liquid-Containing structure>

The ionic liquid-containing structure according to an embodiment of the present invention (hereinafter, also referred to as the structure of the present embodiment) contains an ionic liquid, an inorganic particle network structure, and a polymer network structure, in which the average of the mesh size of the inorganic particle network structure is 50 nm or more, and the polymer network structure is composed of a polymer having a polar group. Such an ionic liquid-containing structure has high long-term storability even in an atmospheric environment and has transparency, moldability, self-supporting properties, flexibility, and toughness, while the structure is in a gel state.

An aspect of the ionic liquid-containing structure of the present embodiment is an ionic liquid-containing network

structure in which an inorganic particle network structure and a polymer network structure are entangled with each other and an ionic liquid is contained between these network structures.

In the structure of the present embodiment, from the viewpoint of toughness of the structure, the average of the mesh size of the inorganic particle network structure is 50 nm or more, preferably 60 nm or more, and more preferably 70 nm or more. From the viewpoint of strength of the structure, the size is preferably 1,000 nm or less, more preferably 900 nm or less, and still more preferably 800 nm or less.

Moreover, from the viewpoint of toughness of the structure, the standard deviation of the mesh size of the inorganic particle network structure is preferably 20 nm or more, more preferably 30 nm or more, and still more preferably 40 nm or more.

Here, the average of the mesh size of the inorganic particle network structure and the standard deviation of the mesh size of the inorganic particle network structure can be calculated from the cross-sectional TEM observation results of the ionic liquid-containing structure. More specifically, it can be calculated by the method described in the section of Examples.

In the structure of the present embodiment, the polymer network structure is composed of a polymer having a polar group. As the polar group of the polymer, the polar group of the polar group-containing monomer described above and a functional group derived therefrom may be mentioned.

The ionic liquid-containing structure of the present embodiment may contain any amino acid such as glycine, serine, alanine, proline, or dimethylglycine as an optional component.

From the viewpoint of high toughness, the ionic liquid-containing structure of the present embodiment preferably has a compressive strength of 0.5 $N/mm^2$ or more and 24 $N/mm^2$ or less, more preferably a compression strength of 10 $N/mm^2$ or more and 24 $N/mm^2$ or less, and more preferably a compression strength of 15 $N/mm^2$ or more and 24 $N/mm^2$ or less. Such compressive strength can be measured using, for example, a compression tester (Autograph; model number AGS-J, manufactured by Shimadzu Corporation).

The ionic liquid-containing structure of the present embodiment can hold the ionic liquid inside, for example, even under high pressure and can be applied to a $CO_2$ absorbing medium such as a $CO_2$ absorbing material or a $CO_2$-selective permeable membrane, which can be used even under high pressure. Further, the ionic liquid-containing structure of the present invention can be also applied to a conductive material, for example.

EXAMPLES

Hereinafter, the present invention will be described specifically with reference to Examples, but the present invention should not be construed as being limited to these Examples.

(Example 1)

0.15 g of AEROSIL (registered trademark) 130 (manufactured by Nippon Aerosil Co., Ltd., specific surface area: 130 $m^2/g$) as silica particles for forming an inorganic particle network structure, 0.43 g of N,N-dimethylacrylamide (DMAAm) as a monomer for forming a polymer network structure, 2.4 g of 1-ethyl-3-methylimidazolium bis(fluorosulfonyl)imide ([Emim] [FSI]) as an ionic liquid, 0.0135 g of N,N'-methylenebisacrylamide (MBAA) as a crosslinking agent (2 mol% based on DMAAm), 0.0061 g of Irgacure 907 (manufactured by BASF) as a polymerization initiator (0.5 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 $mW/cm^2$) for 10 minutes to polymerize the monomer for forming a polymer network structure and, after the cover was peeled off, finally, vacuum drying was performed at 100°C for 8 hours to obtain an ionic liquid-containing structure of Example 1. Incidentally, the network formation by the silica particles proceeded while individual components were mixed and stirred, and an inorganic particle network structure was formed.

(Example 2)

An ionic liquid-containing structure of Example 2 was produced in the same manner as in Example 1 except that 1-ethyl-3-methylimidazolium dicyanamide ([Emim] [DCA]) was used as an ionic liquid instead of 1-ethyl-3-methylimidazolium bis(fluorosulfonyl)imide ([Emim] [FSI]).

(Example 3)

An ionic liquid-containing structure of Example 3 was produced in the same manner as in Example 1 except

that silica particles having a specific surface area of 50 $m^2/g$ (AEROSIL (registered trademark) OX-50 manufactured by Nippon Aerosil Co., Ltd.) were used instead of AEROSIL (registered trademark) 130 as inorganic particles.

(Example 4)

An ionic liquid-containing structure of Example 4 was produced in the same manner as in Example 3 except that 1-ethyl-3-methylimidazolium dicyanamide ([Emim] [DCA]) was used as an ionic liquid instead of 1-ethyl-3-methylimidazolium bis(fluorosulfonyl) imide ([Emim] [FSI]).

(Example 5)

0.015 g of AEROSIL (registered trademark) 130 (manufactured by Nippon Aerosil Co., Ltd., specific surface area: 130 $m^2/g$) and 0.135 g of AEROSIL (registered trademark) OX-50 (manufactured by Nippon Aerosil Co., Ltd., specific surface area: 50 $m^2/g$) as silica particles for forming an inorganic particle network structure, 0.43 g of N,N-dimethylacrylamide (DMAAm) as a monomer for forming a polymer network structure, 2.4 g of 1-ethyl-3-methylimidazolium bis(fluorosulfonyl)imide ([Emim] [FSI]) as an ionic liquid, 0.009 g of N,N'-methylenebisacrylamide (MBAA) as a crosslinking agent (1 mol% based on DMAAm), 0.005 g of Irgacure 379EG (manufactured by BASF) as a polymerization initiator (0.3 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 $mW/cm^2$) for 10 minutes to polymerize the monomer for forming a polymer network structure and, after the cover was peeled off, finally, vacuum drying was performed at 100°C for 8 hours to obtain an ionic liquid-containing structure of Example 5. Incidentally, the network formation by the silica particles proceeded while individual components were mixed and stirred, and an inorganic particle network structure was formed.

(Example 6)

An ionic liquid-containing structure of Example 6 was produced in the same manner as in Example 5 except that the silica particles for forming an inorganic particle network structure were changed to 0.025 g of AEROSIL (registered trademark) 130 (manufactured by Nippon Aerosil Co., Ltd., specific surface area: 130 $m^2/g$) and 0.125 g of AEROSIL (registered trademark) OX-50 (manufactured by Nippon Aerosil Co., Ltd., specific surface area: 50 $m^2/g$).

(Example 7)

An ionic liquid-containing structure of Example 7 was produced in the same manner as in Example 5 except that the silica particles for forming an inorganic particle network structure were changed to 0.0375 g of AEROSIL (registered trademark) 130 (manufactured by Nippon Aerosil Co., Ltd., specific surface area: 130 $m^2/g$) and 0.1125 g of AEROSIL (registered trademark) OX-50 (manufactured by Nippon Aerosil Co., Ltd., specific surface area: 50 $m^2/g$).

(Example 8)

An ionic liquid-containing structure of Example 8 was produced in the same manner as in Example 5 except that the silica particles for forming an inorganic particle network structure were changed to 0.0375 g of AEROSIL (registered trademark) OX-50 (manufactured by Nippon Aerosil Co., Ltd., specific surface area: 50 $m^2/g$) and 0.1125 g of AEROSIL (registered trademark) 130 (manufactured by Nippon Aerosil Co., Ltd., specific surface area: 130 $m^2/g$).

(Example 9)

An ionic liquid-containing structure of Example 9 was produced in the same manner as in Example 5 except that the silica particles for forming an inorganic particle network structure were changed to 0.025 g of AEROSIL (registered trademark) OX-50 (manufactured by Nippon Aerosil Co., Ltd., specific surface area: 50 $m^2/g$) and 0.125 g of AEROSIL (registered trademark) 130 (manufactured by Nippon Aerosil Co., Ltd., specific surface area: 130 $m^2/g$).

(Example 10)

0.15 g of AEROSIL (registered trademark) OX-50 (manufactured by Nippon Aerosil Co., Ltd., specific surface area: 50 $m^2/g$) as silica particles for forming an inorganic particle network structure, 0.43 g of N,N-dimethylacrylamide

(DMAAm) as a monomer for forming a polymer network structure, 2.4 g of 1-ethyl-3-methylimidazolium tricyanomethanide ([Emim] [TCM]) as an ionic liquid, 0.009 g of N,N'-methylenebisacrylamide (MBAA) as a crosslinking agent (1 mol% based on DMAAm), 0.005 g of Irgacure 379EG (manufactured by BASF) as a polymerization initiator (0.3 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 mW/$cm^2$) for 10 minutes to polymerize the monomer for forming a polymer network structure and, after the cover was peeled off, finally, vacuum drying was performed at 100°C for 8 hours to obtain an ionic liquid-containing structure of Example 10. Incidentally, the network formation by the silica particles proceeded while individual components were mixed and stirred, and an inorganic particle network structure was formed.

(Example 11) (TCM, silica particles 130)

0.15 g of AEROSIL (registered trademark) 130 (manufactured by Nippon Aerosil Co., Ltd., specific surface area: 50 $m^2$/g) as silica particles for forming an inorganic particle network structure, 0.43 g of N,N-dimethylacrylamide (DMAAm) as a monomer for forming a polymer network structure, 2.4 g of 1-ethyl-3-methylimidazolium tricyanomethanide ([Emim] [TCM]) as an ionic liquid, 0.009 g of N,N'-methylenebisacrylamide (MBAA) as a crosslinking agent (1 mol% based on DMAAm), 0.005 g of Irgacure 379EG (manufactured by BASF) as a polymerization initiator (0.3 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 mW/$cm^2$) for 10 minutes to polymerize the monomer for forming a polymer network structure and, after the cover was peeled off, finally, vacuum drying was performed at 100°C for 8 hours to obtain an ionic liquid-containing structure of Example 11. Incidentally, the network formation by the silica particles proceeded while individual components were mixed and stirred, and an inorganic particle network structure was formed.

(Example 12)

0.15 g of AEROSIL (registered trademark) OX-50 (manufactured by Nippon Aerosil Co., Ltd., specific surface area: 50 $m^2$/g) as silica particles for forming an inorganic particle network structure, 0.43 g of N,N-dimethylacrylamide (DMAAm) as a monomer for forming a polymer network structure, 2.4 g of 1-ethyl-3-methylimidazolium tetracyanoborate ([Emim] [TCB]) as an ionic liquid, 0.009 g of N,N'-methylenebisacrylamide (MBAA) as a crosslinking agent (1 mol% based on DMAAm), 0.005 g of Irgacure 379EG (manufactured by BASF) as a polymerization initiator (0.3 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 mW/$cm^2$) for 10 minutes to polymerize the monomer for forming a polymer network structure and, after the cover was peeled off, finally, vacuum drying was performed at 100°C for 8 hours to obtain an ionic liquid-containing structure of Example 12. Incidentally, the network formation by the silica particles proceeded while individual components were mixed and stirred, and an inorganic particle network structure was formed.

(Example 13)

0.15 g of AEROSIL (registered trademark) 130 (manufactured by Nippon Aerosil Co., Ltd., specific surface area: 50 $m^2$/g) as silica particles for forming an inorganic particle network structure, 0.43 g of N,N-dimethylacrylamide (DMAAm) as a monomer for forming a polymer network structure, 2.4 g of 1-ethyl-3-methylimidazolium tetracyanoborate ([Emim] [TCB]) as an ionic liquid, 0.009 g of N,N'-methylenebisacrylamide (MBAA) as a crosslinking agent (1 mol% based on DMAAm), 0.005 g of Irgacure 379EG (manufactured by BASF) as a polymerization initiator (0.3 mol% based on DMAAm), and 0.24 g of ethanol as a dispersion medium of the silica particles were mixed and stirred at room temperature for 1 hour. The resultant was cast on a polypropylene film having a thickness of 50 μm to an arbitrary thickness using an applicator, and the coated film was covered with a release-treated PET film so that air did not enter. The film was irradiated with ultraviolet ray of 365 nm (illuminance: 20 mW/$cm^2$) for 10 minutes to polymerize the monomer for forming a polymer network structure and, after the cover was peeled off, finally, vacuum drying was performed at 100°C for 8 hours to obtain an ionic liquid-containing structure of Example 13. Incidentally, the network formation by the silica particles proceeded while individual components were mixed and stirred, and an inorganic particle network structure

was formed.

(Example 14)

After 8.8 g of 1-(2-hydroxyethyl)-3-methylimidazolium bis(trifluoromethanesulfonyl)imide ([$C_2$OHim] [$TF_2$N]) (manufactured by Tokyo Chemical Industry Co., Ltd.) as an ionic liquid and 0.88 g of ethanol were mixed and stirred until the whole became homogeneous, AEROSIL (registered trademark) 200 (manufactured by Nippon Aerosil Co., Ltd., specific surface area: 200 $m^2$/g) as silica particles for forming an inorganic particle network structure was added in an amount of 0.55 g. The solution was stirred with a vortex mixer and then irradiated with ultrasonic waves for 20 minutes to disperse the silica particles. To the obtained dispersion liquid were added 1.64 g of N,N-dimethylacrylamide (DMAAm) as a monomer for forming a polymer network structure, 0.0102 g of N,N'-methylenebisacrylamide (MBAA) as a crosslinking agent (0.4 mol% based on DMAAm), and 0.0024 g of 2-oxoglutaric acid (manufactured by Tokyo Chemical Industry Co., Ltd.) as a polymerization initiator (0.1 mol% based on DMAAm), and the whole was stirred until it became homogeneous to obtain a precursor solution. The precursor solution was injected between two FEP film-attached glass plates sandwiching a 1 mm PTFE spacer, and irradiated with ultraviolet ray of 365 nm for 9 hours. A gel after irradiation was taken out, sprayed with a silicon spray on one side and dried at 100°C for 12 hours or more with the sprayed side down to obtain an ionic liquid-containing structure of Example 14.

(Example 15)

An ionic liquid-containing structure of Example 15 was produced in the same manner as in Example 14 except that a Gemini-type ionic liquid [$C_9$(mim)$_2$] [$TF_2$N] was used as an ionic liquid.

(Example 16)

An ionic liquid-containing structure of Example 16 was produced in the same manner as in Example 14 except that a Gemini-type ionic liquid [$C_9$($C_2$OHim)$_2$] [$TF_2$N] was used as an ionic liquid.

(Example 17)

An ionic liquid-containing structure of Example 17 was produced in the same manner as in Example 14 except that 1-butyl-3-methylimidazolium bis(trifluoromethanesulfonyl)imide ([$C_4$mim] [$TF_2$N]) (manufactured by Tokyo Chemical Industry Co., Ltd.) was used as an ionic liquid.

[Synthesis of Gemini-Type Ionic Liquid [$C_9$($C_2$OHim)$_2$] [$TF_2$N]]

The following operations (i) to (vi) were performed in this order, thereby synthesizing a Gemini-type ionic liquid [$C_9$($C_2$OHim)$_2$] [$TF_2$N].

(i) 1,9-dibromononane and 3 equivalents of 1-(2-hydroxyethyl) -2-imidazole ($C_2$OHim), and IPA were mixed in a round bottom flask and stirred at 110°C for 24 hours to obtain a solution containing a bromide salt [$C_9$($C_2$OHim)$_2$] $Br_2$.
(ii) The residue containing the bromide salt [$C_9$($C_2$OHim)$_2$] $Br_2$ remaining after evaporating the solvent of the solution obtained in (i) at 40°C for 3 hours was dissolved in 20 ml of water, and the solution was washed with 20 ml of ethyl acetate 5 times.
(iii) Water was evaporated from the aqueous phase at 60°C for 3 hours to obtain the bromide salt [$C_9$($C_2$OHim)$_2$] $Br_2$.
(iv) The bromide salt [$C_9$($C_2$OHim)$_2$] $Br_2$ was dissolved in an equal amount of water and mixed with 3 equivalents of Li [$Tf_2$N], followed by stirring for 24 hours.
(v) The aqueous phase and the oil phase were separated, the oil phase (ionic liquid phase) was washed with 10 ml of water, and the washing operation was repeated until no precipitation occurred when an aqueous silver nitrate solution was dropped to the water after washing.
(vi) The ionic liquid phase was evaporated at 60°C for 3 hours to obtain an ionic liquid [$C_9$($C_2$OHim)$_2$] [$TF_2$N]$_2$.

[Chem 2]

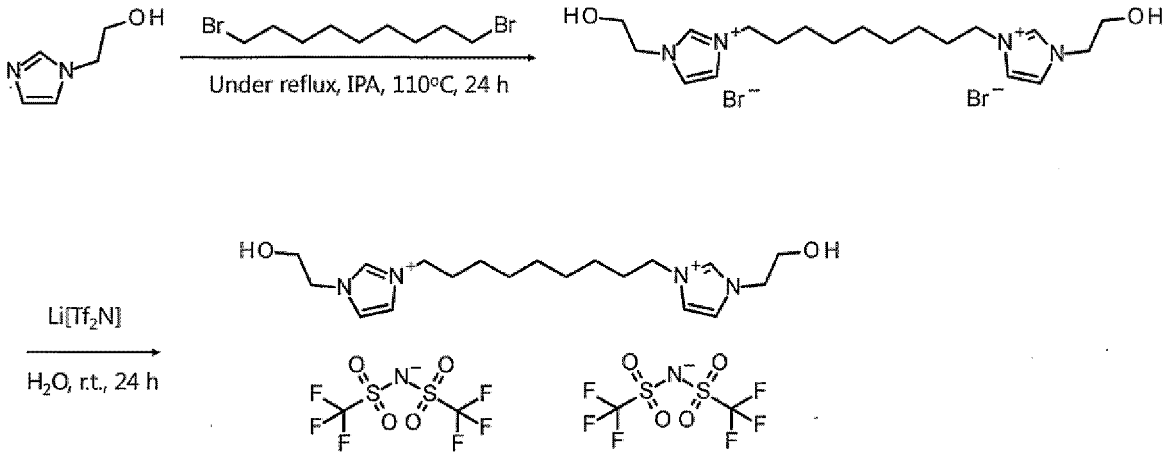


[Synthesis of Gemini-Type Ionic Liquid [$C_9$(mim)$_2$] [$TF_2N$]]

The following operations were performed sequentially to synthesize a Gemini-type ionic liquid [$C_9$(mim)$_2$] [$TF_2N$].

(i) An Gemini-type ionic liquid [$C_9$(mim)$_2$] [$TF_2N$] was synthesized in the same manner as the above synthesis of [$C_9$($C_2$OHim)$_2$] [$TF_2N$] except that 1-methylimidazole (mim) was used instead of $C_2$OHim.

[Chem 3]

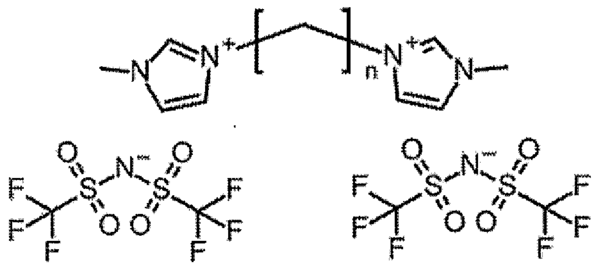

$n = 9$

[$C_9$ (mim) $_2$] [$TF_2N$]

(Comparative Example 1)

0.15 g of tetraethyl orthosilicate (TEOS) as a monomer for forming a network structure by polycondensation, 0.43 g of N,N-dimethylacrylamide (DMAAm) as a monomer for forming a network structure by radical polymerization, 2.4 g of 1-ethyl-3-methylimidazolium bis(fluorosulfonyl)imide ([Emim] [FSI]) as an ionic liquid, 0.0135 g of N,N'-methylenebisacrylamide (MBAA) as a crosslinking agent (2 mol% based on DMAAm), and 0.0061 g of Irgacure 907 (manufactured by BASF) as a polymerization initiator (0.5 mol% based on DMAAm) were mixed and stirred for 1 hour. 0.26 g of formic acid as an acid catalyst was added to this mixture, and the whole was first heated at 50°C for 24 hours to polymerize the monomer for forming a network structure by polycondensation, and then irradiated with ultraviolet ray of 365 nm for 10 minutes to polymerize the monomer for forming a network structure by radical polymerization. Finally, vacuum drying was performed at 100°C for 8 hours to obtain an ionic liquid-containing structure of Comparative Example 1.

(Separation Performance)

Separation performance was measured and calculated for the ionic liquid-containing structure (hereinafter also

referred to as membrane sample) of each example using a gas permeation measuring apparatus (manufactured by GL Sciences Inc.) by an equal pressure method or a differential pressure method. A mixed gas of $CO_2$ and He was charged through the feed side of the apparatus at atmospheric pressure or a total pressure of 0.4 MPa, and Ar gas at atmospheric pressure was circulated through the permeation side. A part of the helium gas on the permeation side was introduced into a gas chromatograph at constant time intervals, to determine the changes in the $CO_2$ concentration and the He concentration. The permeation rate of each of $CO_2$ and He was determined from the amount of increase in each of the concentration of $CO_2$ and the concentration of He with respect to the lapse of time. Table 1 shows the results.

The setting conditions of the gas permeation measuring apparatus, the gas chromatography analysis conditions, and the method of calculating the gas permeation coefficient are as follows.

<Setting Conditions of Gas Permeation Measuring Apparatus>

Feed gas flow rate: 200 cc/min
Feed gas composition: $CO_2$/He (50/50) (volume ratio)
Sweeping gas at permeation side: Ar
Sweeping gas flow rate at permeation side: 10 cc/min
Membrane area: 8.3cm$^2$
Measuring temperature: 30°C

<Gas Chromatography Analysis Conditions>

Ar carrier gas amount: about 10 cc/min
TCD temperature: 150°C
Oven temperature: 120°C
TCD current: 70 mA
TCD polarity: [-] LOW
TCD LOOP: 1 ml silicon steel tube 1/16" × 1.0 × 650 mm

<Performance Calculation Method>

The gas permeation amount N was calculated from the gas concentration in the flowing gas on the permeation side determined by gas chromatography and the permeance (permeation rate) Q was calculated based on the following equations 1 and 2. Moreover, the separation coefficient $\alpha$ was calculated based on the following equation 3.
[Num 1]

$$Q_{CO2} = \frac{N_{CO2}}{A \times (P_f \times X_{CO2} - P_p \times Y_{CO2})} \quad \cdots\cdots \quad \text{Equation 1}$$

[Num 2]

$$Q_{He} = \frac{N_{He}}{A \times (P_f \times X_{He} - P_p \times Y_{He})} \quad \cdots\cdots \quad \text{Equation 2}$$

[Num 3]

$$\alpha = \frac{(Y_{CO2}/Y_{He})}{(X_{CO2}/X_{He})} \quad \cdots\cdots \quad \text{Equation 3}$$

Here, $N_{CO2}$ and $N_{He}$ represent the permeation amounts of $CO_2$ and He (unit: cm$^3$ (STP)), Pf and Pp represent total pressure of supplied gas and total pressure of permeated gas (unit: cmHg), A represents membrane area (cm$^2$), $X_{CO2}$ and $X_{He}$ represent the molar fractions of $CO_2$ and He in the supplied gas, respectively, and $Y_{CO2}$ and $Y_{He}$ represent

molar fractions of $CO_2$ and He in the permeated gas, respectively.

(Membrane Thickness)

The membrane sample of each example that had been subjected to freezing fracture in liquid nitrogen was fixed on a sample table with a carbon tape with the fractured surface facing upward. Pt-Pd was deposited by sputtering, and a cross section was observed on a scanning electron microscope (SU-1500 manufactured by Hitachi High-Tech Corporation) to confirm the membrane thickness. Table 1 shows the results.

[Table 1]

Table 1

| | Ionic liquid | Inorganic particles | Monomer component | Separation performance | | Membrane thickness [μm] |
|---|---|---|---|---|---|---|
| | | | | $CO_2$ permeation rate | Separation coefficient | |
| | | | | [GPU] | $\alpha(CO_2/He)$[-] | |
| Comparative Example 1 | [Emin][FSI] | TEOS | DMAAm +MBAA | 19 | 15 | 30 to 40 |
| Example 1 | [Emin][FSI] | Aerosil 130 | DMAAm +MBAA | 19 | 14 | 30 to 40 |
| Example 2 | [Emin][DCA] | Aerosil 130 | DMAAm +MBAA | 6 | 26 | 80 to 100 |
| Example 3 | [Emin][FSI] | Aerosil OX-50 | DMAAm +MBAA | 15 | 3 | 30 to 40 |
| Example 4 | [Emin][DCA] | Aerosil OX-50 | DMAAm +MBAA | 16 | 22 | 30 to 40 |
| Example 5 | [Emin][FSI] | Aerosil 130/ Aerosil OX-50 =10/1 | DMAAm +MBAA | 47 | 14 | 22 to 28 |
| Example 6 | [Emin][FSI] | Aerosil 130/ Aerosil OX-50 =5/1 | DMAAm +MBAA | 66 | 13 | 2 to 5 |
| Example 7 | [Emin][FSI] | Aerosil 130/ Aerosil OX-50 =3/1 | DMAAm +MBAA | 16 | 16 | 6 to 8 |
| Example 8 | [Emin][FSI] | Aerosil OX-50/ Aerosil 130 =3/1 | DMAAm | 46 | 14 | 6 to 7 |
| Example 9 | [Emin][FSI] | Aerosil OX-50/ Aerosil 130 =5/1 | DMAAm | 32 | 15 | 7 to 12 |
| Example 10 | [Emin][TCM] | Aerosil OX-50 | DMAAm +MBAA | 18 | 21 | 17 to 23 |
| Example 11 | [Emin][TCM] | Aerosil 130 | DMAAm +MBAA | 36 | 19 | 16 to 20 |
| Example 12 | [Emin][TCB] | Aerosil OX-50 | DMAAm +MBAA | 19 | 16 | 24 to 26 |

(continued)

| | Ionic liquid | Inorganic particles | Monomer component | Separation performance | | Membrane thickness [μm] |
|---|---|---|---|---|---|---|
| | | | | $CO_2$ permeation rate | Separation coefficient | |
| | | | | [GPU] | $\alpha(CO_2/He)$[-] | |
| Example 13 | [Emin][TCB] | Aerosil 130 | DMAAm +MBAA | 22 | 9.1 | 10 to 23 |
| Example 16 | $[C_9(C_2OHim)_2]$ $[TF_2N]$ | Aerosil 200 | DMAAm +MBAA | 38 | 7.1 | 6 to 10 |
| Example 17 | [C4min][TF2N] | Aerosil 200 | DMAAm +MBAA | 4 | 2 | 21 to 25 |

Here, $1GPU=1\times10^{-6}$ $cm^3$ (STP)/$cm^2$/cmHg/s.

(Average Primary Particle Diameter of Inorganic Particles)

Table 2 shows the average primary particle diameter of the silica particles used in each of the above Examples and Comparative Example.

[Table 2]

Table 2

| | Aerosil OX-50 | Aerosil 130 | Aerosil 200 |
|---|---|---|---|
| Average primary particle diameter (nm) | 40 | 16 | 12 |

According to Examples 1 to 17 where an inorganic particle network structure was formed using silica particles, an ionic liquid-containing structure could be manufactured in a short period of time. On the other hand, in Comparative Example 1 where an inorganic network structure was formed by polycondensation using TEOS, it took a long time to complete the polycondensation.

The ionic liquid-containing structure obtained in each of Examples and Comparative Examples had good gas separation performance in every case.

Examples 5 to 9 using a mixture of AEROSIL (registered trademark) 130 and AEROSIL (registered trademark) OX-50 as silica particles for forming an inorganic particle network structure had high toughness and hence the membrane thickness could be made thin, and they exhibited a particularly excellent $CO_2$ permeation rate and had good gas separation performance.

(Mechanical Properties)

For each of Example and Comparative Example, an ionic liquid-containing structure (membrane sample) having a thickness of 1 mm was prepared according to the above-mentioned production method and cut out into a predetermined size. The resulting one was tested on an autograph (AGS -X, Shimadzu Corporation) at a tensile rate of 100%/min, and the maximum stress, maximum strain, and Young's modulus were calculated from the stress-strain curve. Table 3 shows the results.

[Table 3]

Table 3

| | Maximum point stress [kPa] | Maximum point strain [-] | Young's modulus [kPa] |
|---|---|---|---|
| Comparative Example 1 | 130 | 0.68 | 190 |
| Example 1 | 112 | 0.52 | 199 |
| Example 2 | 11 | 0.46 | 22 |
| Example 3 | 47 | 0.84 | 50 |
| Example 4 | 9 | 0.3 | 20 |
| Example 5 | 66 | 0.88 | 154 |
| Example 6 | 64 | 0.93 | 146 |
| Example 7 | 41 | 0.53 | 151 |
| Example 8 | 27 | 0.48 | 28 |
| Example 9 | 29 | 0.51 | 24 |
| Example 10 | 2.9 | 0.51 | 16 |
| Example 11 | 30 | 0.77 | 20 |
| Example 14 | 582 | 3.95 | 96.5 |
| Example 15 | 519 | 3.49 | 83.5 |
| Example 16 | 580 | 6.1 | 67.7 |
| Example 17 | 406 | 3.81 | 75.7 |

(Average and Standard Deviation of Mesh size of Inorganic Particle Network Structure)

For the ionic liquid-containing structure (membrane sample) of each of Examples 1 and 2 and Comparative Example 1, the average of the mesh size of the inorganic particle network structure and the standard deviation of the mesh size of the inorganic particle network structure were measured as follows. Table 4 shows the results.

FIG. 1A to FIG. 1C are simulation views of binarized cross-sectional TEM images of an exemplified ionic liquid-containing structure (membrane sample), in which an inorganic particle network structure is formed by an inorganic particle network 1 and vacancy (void) 2 therebetween (see FIG. 1A). In this cross-sectional TEM image, an inscribed circle inscribed to the inorganic particle network 1 was drawn with regard to an arbitrary point (pixel) in the vacancy (void) 2 with that point being a center. FIG. 1B shows a state in which inscribed circles are drawn for some points. Here, when an entire inscribed circle was included in another inscribed circle, the included inscribed circle was deleted (see FIG. 1C). For example, in FIG. 1B, since circles 32 and 33 were included in a circle 31, the circles 32 and 33 were deleted. This operation was performed for all points (pixels) in the vacancy (void) 2 and in the finally created image, how much area the inscribed circle of each diameter occupies in the image was calculated. The diameter of the inscribed circle was expressed in a histogram as the size (diameter) of the mesh of the inorganic particle network, and the average and standard deviation of the mesh size of the inorganic particle network were calculated.

The image analysis was performed using an image analysis software: Image J.

[Table 4]

Table 4

| | Average of mesh size of inorganic particle structure (nm) | Standard deviation of mesh size of inorganic particle structure (nm) |
|---|---|---|
| Example 1 | 320 nm | 168 nm |
| Example 2 | 108 nm | 91 nm |
| Comparative Example 1 | 32 nm | 16 nm |

## INDUSTRIAL APPLICABILITY

According to the present invention, since an inorganic particle network structure is formed through network formation of inorganic particles, the formation of the inorganic particle network structure can be performed in a short period of time, and thus there is provided a method for producing an ionic liquid-containing structure, by which method an ionic liquid-containing structure is produced with high productivity.

While the invention has been described in detail and with reference to specific embodiments thereof, it will be apparent to one skilled in the art that various changes and modifications can be made therein without departing from the spirit and scope thereof.

The present application is based on Japanese Patent Application No. 2017-223766 filed on November 21, 2017, and the contents are incorporated herein by reference.

## REFERENCE SIGNS LIST

| | |
|---|---|
| 1: | Inorganic particle network |
| 2: | Vacancy (void) |
| 31, 32, 33: | Circles |

## Claims

**1.** A method for producing an ionic liquid-containing structure, comprising:

an inorganic particle network structure forming step of forming a network structure by inorganic particles in the presence of an ionic liquid, and
a polymer network structure forming step of forming a network structure by polymerization of a monomer component containing at least a polar group-containing monomer in the presence of the ionic liquid.

**2.** The production method according to claim 1, wherein the inorganic particles include inorganic oxide particles.

**3.** The production method according to claim 2, wherein the inorganic oxide particles include silica particles.

**4.** The production method according to any one of claims 1 to 3, wherein the inorganic particles have a specific surface area of 20 to 300 $m^2/g$.

**5.** The production method according to any one of claims 1 to 4, wherein the inorganic particles have an average primary particle diameter of 1 to 100 nm.

**6.** The production method according to any one of claims 1 to 5, wherein the polar group of the polar group-containing monomer is an atomic group containing an N atom or an O atom.

**7.** The production method according to any one of claims 1 to 6, wherein an amount of the ionic liquid to be used is 5 to 95% by mass based on 100% by mass of components constituting the ionic liquid-containing structure.

**8.** The production method according to any one of claims 1 to 7, which further comprises, before the inorganic particle network structure forming step and the polymer network structure forming step, a mixing step of mixing the ionic liquid, the inorganic particles, and the monomer component.

**9.** An ionic liquid-containing structure comprising:

an ionic liquid,
an inorganic particle network structure, and
a polymer network structure,
wherein an average of a mesh size of the inorganic particle network structure is 50 nm or more and the polymer

network structure is composed of a polymer having a polar group.

**10.** The ionic liquid-containing structure according to claim 9, wherein a standard deviation of the mesh size of the inorganic particle network structure is 20 nm or more.

FIG. 1A

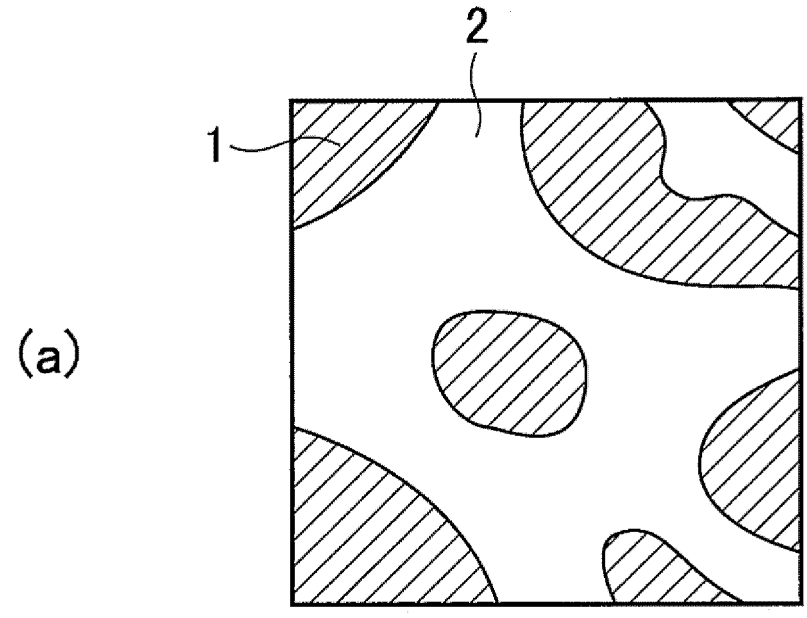


FIG. 1B

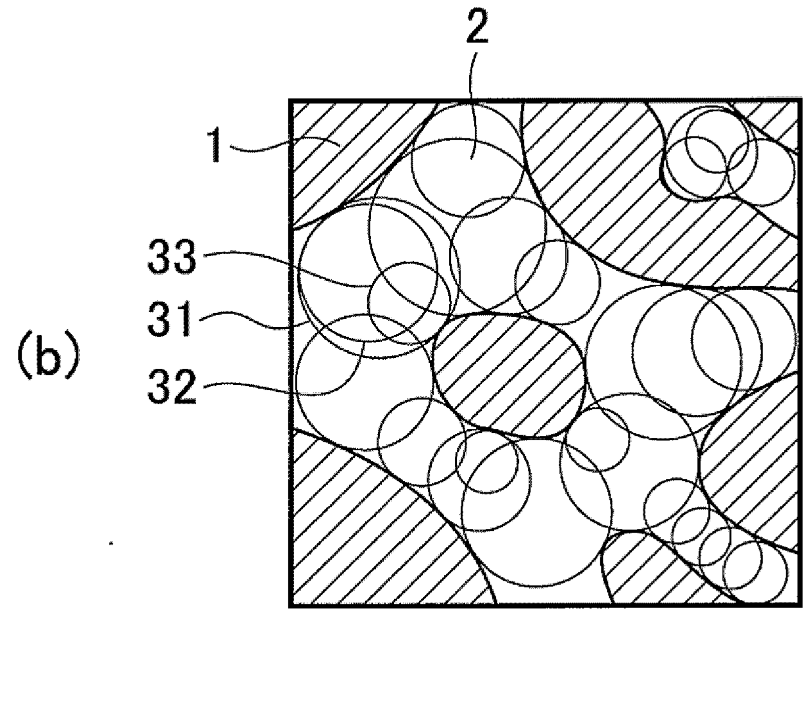

FIG. 1C

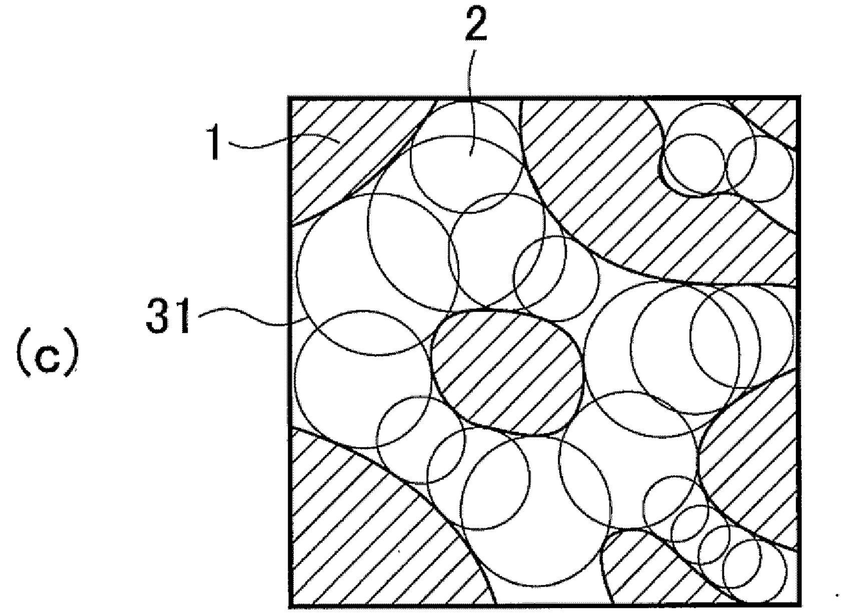

**INTERNATIONAL SEARCH REPORT**

International application No.
PCT/JP2018/043060

A. CLASSIFICATION OF SUBJECT MATTER
Int.Cl. C08F2/44(2006.01)i, B01D69/00(2006.01)i, C08F292/00(2006.01)i

According to International Patent Classification (IPC) or to both national classification and IPC

B. FIELDS SEARCHED

Minimum documentation searched (classification system followed by classification symbols)
Int.Cl. C08F2/00-2/60, 10/00-301/00, B01D69/00-69/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2003-257476 A (FUJI PHOTO FILM CO., LTD.) 12 September 2003, claims 1-2, paragraphs [0006]-[0014], [0017]-[0033], [0036]-[0037], [0041]-[0042], [0092]-[0097] (Family: none) | 1-10 |
| X | JP 2013-506718 A (3M INNOVATIVE PROPERTIES COMPANY) 28 February 2013, claims 1-37, paragraphs [0088]-[0089], [0106]-[0123], [0136]-[0217] & WO 2011/025847 A2, claims 1-37, page 20, lines 14-27, page 24, line 26 to page 27, line 23, page 30, line 8 to page 40, line 11 & EP 2470509 A2 & US 2012/0101184 A1 | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 January 2019 (15.01.2019) | 22 January 2019 (22.01.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/043060

C (Continuation). DOCUMENTS CONSIDERED TO BE RELEVANT

| Category* | Citation of document, with indication, where appropriate, of the relevant passages | Relevant to claim No. |
|---|---|---|
| X | JP 2011-70997 A (KONICA MINOLTA HOLDINGS, INC.) 07 April 2011, claims 1-5, paragraphs [0051]-[0069], [0083]-[0097], [0117]-[0157] (Family: none) | 1-10 |
| X | WO 2010/092897 A1 (KONICA MINOLTA HOLDINGS, INC.) 19 August 2010, claims 1-9, paragraphs [0039]-[0054], [0058]-[0075], [0094]-[0113] (Family: none) | 1-10 |
| X | JP 2011-54463 A (KONICA MINOLTA HOLDINGS, INC.) 17 March 2011, claims 1-7, paragraphs [0032]-[0058], [0092]-[0111], [0161]-[0191] (Family: none) | 1-10 |
| X | JP 2006-310071 A (THE NIPPON SYNTHETIC CHEMICAL INDUSTRY CO., LTD. et al.) 09 November 2006, claims 1-9, paragraphs [0029], [0031]-[0033], [0061]-[0077] (Family: none) | 1-10 |
| A | JP 2015-25056 A (KOBE UNIVERSITY) 05 February 2015 (Family: none) | 1-10 |
| A | JP 2009-292908 A (INDEPENDENT ADMINISTRATIVE INSTITUTION NATIONAL INSTITUTE FOR MATERIALS SCIENCE) 17 December 2009 & WO 2009/148082 A1 & EP 2287232 A1 & US 2011/0105656 A1 | 1-10 |
| A | JP 2009-269971 A (KAWAMURA INSTITUTE OF CHEMICAL RESEARCH) 19 November 2009 (Family: none) | 1-10 |
| A | JP 2007-297421 A (YOKOHAMA NATIONAL UNIVERSITY) 15 November 2007 (Family: none) | 1-10 |
| A | JP 2017-82061 A (KANTO KAGAKU KABUSHIKI KAISHA) 18 May 2017 & WO 2017/073557 A1 | 1-10 |
| A | JP 2011-119053 A (KONICA MINOLTA HOLDINGS, INC.) 16 June 2011 (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012511612 T
- JP 2008024818 A
- JP 6103708 B
- JP 2017223766 A


### Non-patent literature cited in the description


- Reference Literature. *Chem. Mater.,* 2007, vol. 19, 5848-5850